# EUROPEAN PATENT SPECIFICATION

(11) **EP 4 164 398 B1**
(45) Date of publication and mention of the grant of the patent: **20.08.2025**
(21) Application number: 21733580.1
(22) Date of filing: 11.06.2021
(51) Int. Cl.: A23C 9/12, A23C 9/123, A23C 9/13, A23L 33/21

(54) **FIBRE-SUPPLEMENTED ACIDIFIED DAIRY PRODUCTS AND METHODS FOR PROVIDING THE SAME**
GESÄUERTE, BALLASTSTOFFREICHE MILCHPRODUKTE UND VERFAHREN ZU DEREN HERSTELLUNG
PRODUITS LAITIERS ACIDIFIÉS ENRICHIS EN FIBRES ET PROCÉDÉS DE FOURNITURE ASSOCIÉS

(30) Priority: 11.06.2020 EP 20179461
(43) Date of publication of application: 19.04.2023
(73) Proprietor: Coöperatie Koninklijke Avebe U.A., 9641 GK Veendam (NL)
(72) Inventor: OUDHUIS, Alida Anna Catharina Maria, 9641 GK Veendam (NL); LEEMHUIS, Reinder Johannes, 9641 GK Veendam (NL); BUWALDA, Pieter Lykle, deceased (NL)
(74) Representative: V.O.
(86) International application number: PCT/NL2021/050371
(87) International publication number: WO 2021/251828

(56) References cited:
- CN-A- 104 041 583
- CN-A- 109 769 937
- US-A1- 2007 082 087
- DATABASE GNPD [online] MINTEL; 18 April 2019 (2019-04-18), ANONYMOUS: "Sugar Free Greek Style Yogurt", XP055745940, retrieved from https://www.gnpd.com/sinatra/recordpage/6485387/ Database accession no. 6485387
- DATABASE GNPD [online] MINTEL; 18 February 2020 (2020-02-18), ANONYMOUS: "Peach Yogurt", XP055745938, retrieved from https://www.gnpd.com/sinatra/recordpage/7256513/ Database accession no. 7256513
- DATABASE GNPD [online] MINTEL; 18 February 2020 (2020-02-18), ANONYMOUS: "Peach Yogurt", XP055745938, retrieved from www.gnpd.com Database accession no. 7256513
- DATABASE GNPD [online] MINTEL; 18 April 2019 (2019-04-18), ANONYMOUS: "Sugar Free Greek Style Yogurt", XP055745940, retrieved from www.gnpd.com Database accession no. 6485387
- HANS LEEMHUIS ET AL: "Isomalto/Malto-Polysaccharide, A Novel Soluble Dietary Fiber Made Via Enzymatic Conversion of Starch", JOURNAL OF AGRICULTURAL AND FOOD CHEMISTRY, vol. 62, no. 49, 10 December 2014 (2014-12-10), pages 12034 - 12044, XP055335825, ISSN: 0021-8561, DOI: 10.1021/jf503970a
- VAN DER ZAAL P H ET AL: "Isomalto/malto-polysaccharide structure in relation to the structural properties of starch substrates", CARBOHYDRATE POLYMERS, APPLIED SCIENCE PUBLISHERS, LTD. BARKING, GB, vol. 185, 23 November 2017 (2017-11-23), pages 179 - 186, XP085342735, ISSN: 0144-8617, DOI: 10.1016/J.CARBPOL.2017.11.072
- P.H. VAN DER ZAAL ET AL: "Enzymatic fingerprinting of isomalto/malto-polysaccharides", CARBOHYDRATE POLYMERS, vol. 205, 1 February 2019 (2019-02-01), GB, pages 279 - 286, XP055746092, ISSN: 0144-8617, DOI: 10.1016/j.carbpol.2018.09.049
- JUSTYNA M DOBRUCHOWSKA ET AL: "Structural characterization of linear isomalto-/malto-oligomer products synthesized by the novel GTFB 4,6-[alpha]-glucanotransferase enzyme from Lactobacillus reuteri 121", GLYCOBIOLOGY, vol. 22, no. 4, 2 December 2011 (2011-12-02), US, pages 517 - 528, XP055745946, ISSN: 0959-6658, DOI: 10.1093/glycob/cwr167

## Description

The invention relates to the field of acidified dairy products. More specifically, it relates to the use of slow or non-digestible, dietary, prebiotic polysaccharide fibres to improve the viscosity of acidified dairy products. Also provided are methods to provide a spoonable acidified dairy product comprising such fibres, and such products
The term 'dietary fibre' was originally coined by Hipsley (British. Medical. J., 1953, vol. 2, p. 420-422) to describe plant cell wall components of food. The existing Codex Alimentarius Guidelines define "Dietary fibre" as "edible plant and animal material not hydrolysed by the endogenous enzymes of the human digestive tract as determined by the agreed upon method." Generally, dietary fibre is classified either as soluble or insoluble. Examples of soluble fibre include inulin, oligosaccharides, pectins, β-glucans and polydextrose. Cellulose, hemicellulose, lignin, wheat bran and resistant starch on the other hand are examples of insoluble fibres.

There is considerable evidence that a diet high in fibre confers significant health benefits, including reducing the risk of coronary heart disease, stroke, hypertension, diabetes, obesity, various cancers and certain gastrointestinal disorders. There are various processes underlying these benefits. For instance, dietary fibres provide bulking and laxation which contributes to healthy bowel movements. Moreover, dietary fibre slows down the rate of absorption from the small intestine, particularly of glucose. '

A particularly relevant class of the dietary fibres are the prebiotic fibres. Prebiotic fibres are fermented by saccharolytic (carbohydrate-fermenting) micro-organisms in the large intestine. These micro-organisms are considered beneficial to human health. The fermentation of prebiotic fibres by these micro-organisms produces short-chain fatty acids which are absorbed from the intestine and have various physiological roles. Examples of prebiotic fibres include fructo-oligosaccharides (FOS), galacto-oligosaccharides (GOS), lactulose, inulin, which can be found for instance in chicory root, garlic, leek, onions, asparagus and wheat.

A diet rich in prebiotic fibres promotes the growth of these beneficial carbohydrate-fermenting micro-organisms. This increases the ratio of beneficial carbohydrate fermenters to potentially harmful protein fermenters, leading to a healthier gut microbiome.

The importance of dietary fibres, and in particular prebiotic fibres, for human health is now widely recognised. The WHO recommends a daily intake of 30-40g for adults males and 20-30g for adult females. However, particularly in many Western societies, the majority of adults struggle to meet this. For instance, most Americans only achieve a fibre intake of about half of this recommended daily dose.

A promising route to increase dietary fibre intake is to supplement popular processed foods with such fibres. Consumers may be encouraged to buy supplemented products which can be recognised by their labelling. For example, according to guidelines of the European Commission, a processed food product may be labelled "a source of fibre" if the fibre concentration is at least 3% by weight. If the fibre concentration is at least 6 % by weight, the label "high fibre" may be added to the product.

Prebiotic fibres for use as a supplement in processed foods may be isolated from plant sources. For instance, inulin can be extracted from chicory root and β-glucans may be extracted from oats. It is also possible to synthesise prebiotic fibres. Polydextrose for example may be synthesised from glucose.

Deriving prebiotic fibres from starch could be an attractive alternative. Starch is a polysaccharide used by green plants as a means to store energy and is typically present at high concentrations in such plants. This makes it a relatively affordable starting product. Rice, wheat, corn and potato are good sources of starch, with approximately 76% of the dry matter of a potato consisting of starch.

Native untreated starch itself, i.e. starch granules, is not digested in the small intestine and is generally referred to as resistant starch type 2. However, upon dissolution, also referred to as gelatinisation, to benefit from its texturizing and thickening properties when applying starch in food, starch becomes readily digestible by enzymes released in the mouth, stomach and small intestine. Starch may be modified, either chemically or enzymatically, to produce a fibre with prebiotic characteristics. For instance, WO2010/128859 discloses that a slow or non-digestible fibre composition can be obtained by treating starch with a GTFB-type α-glucanotransferase enzyme and the resulting alpha-glucan may be used as a food additive to provide a prebiotic fibre.

Spoonable acidified dairy is an example of a popular processed food category which is often cited as a candidate for supplementation with prebiotic fibre. Spoonable acidified dairy products have a smooth texture and are sufficiently firm or viscous to be consumed using a spoon. Examples of spoonable acidified dairy products include yoghurt, Greek-style yoghurt, quark, skyr, curd and fresh cheese. These products are appreciated for their delicate balance between fresh and creamy taste and smooth texture.

Acidified dairy products are also generally perceived as healthy. They are a good source of protein, vitamins and calcium. Moreover, if the acidified dairy product is a cultured dairy product, it can contain live cultures of beneficial carbohydrate-fermenting micro-organisms. Consumption of products containing these so-called probiotics can help improve the balance between beneficial and harmful bacteria in the gut.

Although some indigestible polysaccharides (the exo-polysaccharides) may be present, the amount of fibre in acidified dairy products is typically far too low for these product to be classed a source of fibre. It is therefore desirable to increase their potential health benefits by supplementing them with prebiotic fibres.

When supplementing an acidified milk product such as yoghurt, it is important to maintain the desirable creamy taste and smooth texture. The perception of creaminess and the smooth texture of acidified dairy products are key aspects for consumer appreciation of these products. The rheological properties and viscosity underlie these observables and more viscous yoghurts tend to be valued higher by consumers.

Supplementation of yoghurt with prebiotic fibres according to WO2010/128859 does not have a positive effect on the viscosity of yoghurt. Hence, the inventors recognised the need for a method to increase the amount of prebiotic fibre in acidified dairy products without sacrificing the rheological properties of such products.

It was surprisingly found that supplementing a milk product with an alpha-glucan composition obtained by treatment of starch with both pullulanase and a GTFB-type α-(4,6)-glucanotransferase prior to acidification resulted in a yoghurt with both a high content of slowly or non-digestible fibre and desirable rheological properties. The α-glucan composition comprises essentially linear isomalto/malto-polysaccharides (IMMPs) characterised by a content of α(1→6) glycosidic linkages of at least 70%. Addition of such IMMPs to a milk product prior to fermentation resulted in products with a significantly higher viscosity.

Accordingly, the invention provides a method for providing a spoonable acidified dairy product comprising the steps of:
a) providing an α-glucan composition comprising essentially linear isomalto/malto-polysaccharides (IMMPs) wherein the content of α(1→6) glycosidic linkages is at least 70%;
b) supplementing a milk product with said α-glucan composition to provide a supplemented milk product comprises at least 3 wt%, of IMMPs;
c) acidifying said supplemented milk product to a pH below 5.

In a further aspect, the invention provides a spoonable acidified dairy product comprising at least 3 wt%, preferably at least 6 wt%, essentially linear isomalto/malto-polysaccharides (IMMPs), having a content of α(1→6) glycosidic linkages of at least 70%.

Although the desirability of supplementing acidified dairy products with slow or non-digestible and/or prebiotic fibres is widely recognised, a method of the invention and products relating thereto are not known or suggested in the art.

Several yoghurts supplemented with the prebiotic inulin are currently on the market. However, inulin does not increase the viscosity of such yoghurts and its application is preferentially limited to low-viscosity products such as stirred and drink yoghurts.

Addition of polydextrose does increase the viscosity of yoghurts according to Allgeyer *et al.* (2010), but the resulting product was perceived as chalky.

WO2008/000913 indicates that a combination of a soluble flax fibre and a transglutaminase may be added prior to fermentation to increase the viscosity of acidified dairy products. However, the prebiotic fibre alone is not sufficient to obtain the desired increase in viscosity.

Alternatively, high molecular weight glucans may be used to enhance the viscosity of acidified milk products. For instance, dextran with a molecular weight of 500 kDa (Mende *et al.* 2013 [1]) or 2000 kDa Pachekrepapol *et al.* (2015) [2] have been shown to increase the viscosity of acid milk gels. Also, WO2005/048735 discloses that a fraction comprising at least 20% β-glucan with a molecular weight over 400 kDa extracted from oats and barley may be added to yoghurt to increase viscosity. It should be noted that such high molecular weight additives tend to cause phase separation in milk products due to depletion effects. Moreover, the β-glucan enriched fraction used in WO2005/048735 also comprises proteins and oils. It is unknown how these may contribute to the observed increase in viscosity and their presence is undesirable from an organoleptic point of view.
Also, the use of isomalto-oligosaccharides to supplement fermented dairy products is known in the art.

Spoonable yoghurts comprising isomalto-oligosaccharides have been marketed by Samyang Foods and Taiwan BifidoFerment Co. See "Peach Yogurt", GNPD Database accession no .7256513 and "Sugar Free Greek Style Yogurt" GNPD Database accession no. 6485387.

CN109769937 discloses a malto-oligosaccharide yoghurt and methods for its preparation. The malto-oligosaccharide yoghurt is prepared from, by weight, 6-15 parts of starch, 0.01-1 part of alpha-amylase, 3-10 of milk protein, 0.07-0.1 part of a leavening agent and the balance milk, wherein the total parts by weight are 1000. In the method, enzymolysis and fermentation are carried out at the same time. By selecting the suitable starch as a base stabilizer and an enzymolysis substrate and adding the alpha-amylase, the starch can be decomposed into malto-oligosaccharide, dextrin and the like, and the probiotic healthcare characteristics of the yogurt can be further improved.

US2007/0082087 relates to milk products fermented by Bifidobacterium longum, Lactobacillus delbrueckii subsp. Bulgaricus, and Streptococcus thermophilus, and added isomalto-oligosaccharide acting as prebiotic to increase the population of Bifidobacterium longum in the fermented milk products.

CN109769937 relates to a yoghurt, a fermented spoonable dairy product comprising malto-oligosaccharide. The products provided show good sensory properties. CN109769937 is however silent about IMMPs characterised by a content of α(1→6) glycosidic linkages of at least 70%.

CN104041583 discloses an isomalto-oligosaccharide yogurt, comprising 2-15 wt.% of isomalto-oligosaccharide, fermented milk and 37 wt.% of xylitol. Preferably, the isomalto oligosaccharide is IMO-90

However, it is important to note that IMMPs for use in the present invention are structurally distinct from IMOs. IMO is a branched, non-fermentable oligosaccharide, also known as branching oligosaccharide or oligoglucose. Whereas IMOs typically cover a DP range from 2 to about 6, IMMPs are considerably larger (IMMPs up to DP35 have been identified).

The IMMP fibres for use in the present invention are known. Leemhuis *et al.* (2014) [3] describes the production of IMMPs by treatment of starch with pullulanase and a GTFB-type α-(4,6)-glucanotransferase. However, Leemhuis *et al.* is silent about the possible use of such IMMPs in acidified dairy products. Moreover, Leemhuis *et al.* does not provide any information or suggestions regarding how these IMMPs may affect the viscosity of such products.

Hence, the art does not teach or suggest the use of IMMP fibres having at least 70% of α(1→6)-glycosidic bonds to increase the viscosity of acidified milk products as herein disclosed.

IMMPs for use in the invention comprise essentially linear α-glucans with one or more α(1→4)-linked glucose monomers at the reducing end and one or more glucose units linked *via* α(1→6)-glycosidic bonds at its non-reducing end. In order to be available for microbial fermentation in the large intestine, such IMMP fibres must be resistant to digestion by human enzymes. Human enzymes are capable of degrading only a small subset of glycosidic linkages present in polysaccharides. Of particular relevance to IMMP digestion are the pancreatic and salivary amylases. Amylases hydrolyse α(1→4) glycosidic linkages in polysaccharides and break down their natural substrates, e.g. starch and glycogen, into maltose and glucose. The major form of amylase in mammalians is α-amylase. This enzyme can only act on α(1→4) bonds in a stretch of at least three consecutive α(1→4) glycosidic linkages.

Humans mainly rely on the amylase enzyme for digestion of carbohydrates. This enzyme is not capable of hydrolyzing α(1→6) glycosidic linkages. Therefore, polysaccharides with an increased content of α(1→6) glycosidic linkages are less sensitive to digestion in the small intestine and can be regarded as slow or non-digestible soluble fibres. As used herein, the content of α(1→6) linkages is defined as (number of α(1→6) linkages)/(( number of α(1→6) linkages)+( number of α(1→4) linkages)).

IMMPs for use in the invention have a content of α(1→6) linkages of at least 70%. Preferably, the IMMPs have a content of α(1→6) glycosidic linkages of at least 72%, more preferably at least 74%. In another preferred embodiment, they contain between 75 and 99% of α(1→6) glycosidic linkages, for instance 76%, 78%, 79%, 82%, 85%, 87%, 90%, 91%, 93%, 94%, 96%, 97% or 98%.

Good results in terms of viscosity increase of the supplemented acidified dairy product were obtained with IMMPs wherein the content of α(1→6) glycosidic linkages is around 70%, 77% or 87 %. Accordingly, in a particularly preferred embodiment, the degree of α(1→6) glycosidic linkages is in the range of 70-90%, e.g. 70-75%, 74-77%, 75- 85%, 80-90%.

IMMPs containing about 96% α(1→6) glycosidic linkages also showed a desirable effect on the viscosity of a acidified dairy product. Therefore, in another embodiment, the content of α(1→6) glycosidic linkages is in the range of 90-98%, preferably around 95-97%.

In a particularly preferred embodiment, IMMPs for use according to the invention have a content of α(1→6) glycosidic linkages between 80% and 100%, preferably between 82% and 99%, most preferably between 85% and 98%, for instance 86%, 87%, 88%, 89%, 90%, 91%, 92%, 93%, 94%, 95%, 96% or 97%.

The IMMPs can vary in their chain length. In one embodiment, the IMMP has a molecular weight between 1.0*10³ and 1.0*10⁶ Da, as determined by GPC-RI-MALLS analysis. This corresponds to a degree of polymerization (DP) of the entire gluco-oligosaccharide (moiety) of at least 6 glucose residues and at most approximately 6200 glucose residues. Preferably, the gluco-oligosaccharide (moiety) has a DP of at least 20, more preferably at least 30 glucose residues. In a particularly preferred embodiment, the DP of the gluco-oligosaccharide (moiety) is between 25 and 6200, preferably between 30 and 700, more preferably between 35 and 400.

IMMPs for use in the invention are essentially linear . In other words, the IMMPs have a low degree of branching, wherein the degree of branching is defined as (number of α(1→4,6) branching points)/(number of glucose residues))*100%. In one embodiment, the branching degree is below 5%. Preferably, the branching degree of the IMMPs is below 4%, more preferably below 3% and even more preferably below 2%. In a particularly preferred embodiment, the IMMPs have a branching degree below 1%.

In a specific embodiment the isomalto/malto-polysaccharides (IMMPs) for use in the invention comprise linear (i.e. unbranched) gluco-oligosaccharides of the general formula A-B, glucans comprising such linear moiety, or a mixture comprising different gluco-oligosaccharides / moieties of the general formula A-B, characterized in that (i) the linkage between the moiety A and the moiety B is an α(1→6) glycosidic linkage; (ii) moiety A comprises at least two consecutive α(1→6) glycosidic linkages; (iii) B comprises at least two consecutive α(1→4) linked glucose residues; and (iv) wherein the content of α(1→6) glycosidic linkages is at least 70%. Linear gluco-oligosaccharides of the general formula A-B are particularly preferred.

Therefore, the invention also relates to a method for providing a spoonable acidified dairy product, comprising the steps of:
a) providing an alpha-glucan composition comprising IMMPs comprising linear (i.e. unbranched) gluco-oligosaccharides of the general formula A-B, glucans comprising such linear moiety, or a mixture comprising different gluco-oligosaccharides / moieties of the general formula A-B, characterized in that (i) the linkage between the moiety A and the moiety B is an α(1→6) glycosidic linkage; (ii) moiety A comprises at least two consecutive α(1→6) glycosidic linkages; (iii) B comprises at least two consecutive α(1→4) linked glucose residues; and (iv) wherein the content of α(1→6) glycosidic linkages is at least 70%;
b) supplementing a milk product with said alpha-glucan composition to provide a supplemented milk product comprises at least 3 wt% of IMMPs; and
c) acidifying the supplemented milk product to a pH below 5, preferably to a pH of about 4.6.

Preferably, moiety A comprises an isomalto-oligosaccharide with a DP of at least four glucose residues. For instance moiety A is an isomalto-oligosaccharide consisting of four glucose residues. A moieties with a higher DP are preferred as these are considered to render the IMMP less prone to digestion by human enzymes. Thus, in a preferred embodiment, the A moiety has a DP of at least 15, preferably at least 25, more preferably at least 35, most preferably at least 50 glucose residues.

Moiety B consists of a series of consecutive α(1→4) linked glucose residues. For instance, moiety B consists of two, three, four or five consecutive α(1→4) linked glucose moieties.

IMMPs for use in the invention can be obtained by subjecting a starch substrate to a treatment with a debranching enzyme and to a treatment with a GTFB-type 4,6-α-glucanotransferase enzyme.

GTFB-type 4,6-α-glucanotransferase enzyme suitable for use in the invention include those disclosed in WO2010/128859. GTFB-type 4,6-α-glucanotransferase enzymes cleave off the non-reducing glucose moiety of a (1→4)-α-D-gluco-oligosaccharide and attach this glucose moiety to the non-reducing end of another α(1→4)-glucan chain *via* an α(1→6) linkage without forming branches. This cycle is repeated, resulting in a linear α-glucan with consecutive α(1→6) linkages build onto a (1→4)-α-D-gluco-oligosaccharide.

The GTFB-type 4,6-α-glucanotransferase enzyme will stop when it reaches a branch point in the glucose donor substrate. Hence, there is a negative correlation between the degree of branching in the starch substrate and the degree of α(1→6) glycosidic linkages in the IMMP product. In order to obtain the high degree of α(1→6) glycosidic linkages desirable for this invention, the starch substrate may need to be de-branched.

Accordingly, in one embodiment IMMPs with a content of α(1→6) linkages of at least 70% are provided by (i) providing a starch substrate; (ii) treating the starch substrate with a debranching enzyme; and (iii) treating the (partially) debranched starch substrate with GTFB-type 4,6-α-glucanotransferase enzyme. During the enzymatic conversion, the percentage of α(1→6) linkages gradual increases at the expense of α(1→4) linkages. Products with over 90% α(1→6) linkages can be obtained, while products with a lower percentage of α(1→6) linkages can be obtained by shortening the reaction time.

Therefore, also provided is a method for providing a spoonable acidified dairy product, comprising the steps of: a) treating a starch substrate with a debranching enzyme; and treating the (partially) debranched starch substrate with GTFB-type 4,6-α-glucanotransferase enzyme to provide an alpha-glucan composition comprising IMMPs characterised by a content of α(1→6) glycosidic linkages of at least 70%; b) supplementing a milk product with said alpha-glucan composition to provide a supplemented milk product comprises at least 3 wt% of IMMPs; and c) acidifying the supplemented milk product to a pH below 5, preferably to a pH of about 4.6.

In one embodiment, the enzyme treatment steps are carried out sequentially. That is, treatment of a starch substrate with a debranching enzyme may precede treatment with the GTFB-type 4,6-α-glucanotransferase enzyme. However, from an industrial perspective, it is typically desirable to perform the enzyme treatments simultaneously. Moreover, a higher degree of α(1→6) linkages was observed if a starch substrate was treated simultaneously with both the debranching enzyme pullulanase and a GTFB-type 4,6-α-glucanotransferase enzyme. Therefore, in a preferred embodiment the IMMPs are obtained by subjecting a starch substrate to a simultaneous treatment with both a debranching enzyme and a GTFB-type 4,6-α-glucanotransferase enzyme.

Suitable debranching enzymes include pullulanase (EC 3.2.1.41), isoamylase (EC 3.2.1.68) or limit dextrinase (3.2.1.142). In a preferred embodiment, the debranching enzyme is pullulanase or isoamylase, preferably pullulanase.

The first known GTFB-type 4,6-α-glucanotransferase enzymes has been identified in *Lactobacillus reuteri* 121. However, GTFB homologs are present in several *Lactobacillus* strains. Therefore, in one embodiment the GTFB-type 4,6-α-glucanotransferase for use in the invention is selected from the group consisting of GTFB from *Lactobacillus reuteri* 121, GTFB106B from *Lactobacillus reuteri* TMW 1.106, GTML4 from *Lactobacillus reuteri* ML1, GTFDSM from *Lactobacillus reuteri* DSM 20016^{A} and GTF from *Lactobacillus fermentum* ATCC 14931 or a homolog thereof showing at least 55%, preferably at least 65%, more preferably at least 75%, most preferably at least 85% sequence identity. In a preferred embodiment, the GTFB-type 4,6-α-glucanotransferase enzyme for use in the invention is GTFB from *Lactobacillus reuteri 121.*

Although neither the debranching enzymes nor the GTFB-type 4,6-α-glucanotransferase enzymes introduce α(1→4,6) branching points, IMMPs obtainable by these enzymes may still have some residual branching from the substrate. However, the degree of branching in the IMMPs is always lower than the branching degree in the starch substrate.

Any native or unmodified starch may be used as a starting material for obtaining the IMMPs for use in the present invention. For example, the IMMPs can be derived from cereal starches such as corn, wheat, rice, barley, and rye starches. Alternatively, root or tuber starches, for instance tapioca, potato and sweet potato starch, or leguminous starches, such as pea, lentil and bean starch, can be used as a starting material. These starches have amylose to amylopectin ratios in the range 1:3 to 1:7. However, waxy starches which have a higher amylopectin content are also suitable substrates in a method according to the invention. Examples include waxy tapioca, waxy maize, waxy potato, waxy rice and waxy barley starch. Moreover, other starch sources that can be used, like mung bean, wrinkled pea and high-amylose corn starches, are enriched in amylose.

This list is by no means exhaustive, but it is understood that starches, high amylopectin (waxy) starches and high amylose starches from any source can be used as a starting material to obtain IMMPs for use in the invention. Starches used as a starting material can be derived from non-GMO as well as GMO plant variants.

Besides native starches, modified or derivatized starches can be used as well. Many ways of derivatization are known to the artesian (O.B. Wurzburg, Modified starches - properties and uses, CRC Press Inc, Boca Raton US, 1986 ISBN: 0-8493-5964-3). These derivatizations encompass crosslinking, enzymatic degradation, acid degradation, oxidation, etherification, esterification, dry roasting, dextrinization, etc. Furthermore certain physical treatments may alter a starch's functionalities. For example, drum drying, spray cooking and extrusion will make starch cold water soluble. In a preferred embodiment, a food grade potato starch is used as a starting material to obtain IMMPs for use in the invention.

To obtain a spoonable acidified dairy product according to the invention, a milk product is supplemented with IMMPs. In comparison to other prebiotic fibres, supplementation with IMMPs results in a desirable increase in viscosity of the final acidified dairy product. Supplementation with 1.5% by weight IMMP-87 results in an almost 10% increase in Brookfield viscosity of a set yoghurt.

The Brookfield viscosity of the obtained yoghurts or acid milk gels increases approximately linearly with the IMMP content over the tested range. Although a higher IMMP content is of course possible, in practice an upper limit of about 20 wt% is envisioned to remain within the desired range of viscosity in the final acidified dairy product. For a stirred yoghurt, the viscosity ranges typically between 5000 mPas and 70000 mPas, measured with a Brookfield DV2 equipped with a Helipath spindle at 10 rpm measured at a temperature between 4 and 6°C.

A desirable increase in viscosity can be obtained when the milk product is supplemented with between 3 wt% and 12 wt% IMMPs. Hence, in a particularly preferred embodiment, the milk product is supplemented with between 3 wt% and 12 wt%, for instance with 3 wt%, 3.5 wt% 4 wt%, 4.5 wt%, 5 wt%, 5.5 wt%, 6 wt%, 7 wt%, 8 wt%, 9 wt%, 10 wt%, 11 wt% or 12 wt% IMMPs.

A wide variety of milk products can be used as a starting material to obtain an IMMP-supplemented, spoonable acidified dairy product following a method of the invention. For instance, the milk product can be raw or processed. Whole (full fat), skimmed (fat free) or semi-skimmed milk are suitable as a starting material. These can be used fresh or reconstituted, e.g. from dried, powdered milk. Condensed milk can also be used as a starting material. The milk product may also be a mixture of the above. For instance, the milk product comprises both whole and semi-skimmed milk or it comprises both fresh and reconstituted and/or condensed milk.

Traditionally, acidified dairy products are made from milk produced by mammals. The most common example hereof is cow's milk. Other examples include goat milk, sheep milk, buffalo milk, and camel milk.

More recently, plant-based milk substitutes have gained in popularity. Plant-based milk substitutes, usually referred to as plant drinks or plant beverages, can be made from grains (e.g. barley, maize, millet, oat, rice, spelt, and wheat), pseudocereals (e.g. buckwheat and quinoa), legumes (e.g. pea, peanut and soy), nuts (e.g. almond, brazil, cashew, hazelnut, macadamia, pecan and walnut), seeds (e.g. chia seed, flax seed, hemp seed and pumpkin seed), fruit (e.g. coconut) and tubers (e.g. potato and tiger nut). Common plant-based milk substitutes currently on the market include almond drinks, coconut drinks, oat drinks and soy drinks. Plant-based milk substitutes have several advantages over animal milks. Besides being suitable for vegans, plant-based milk substitutes are safe for consumption by lactose-intolerant individuals as they are lactose-free. Moreover, their environmental footprint is typically lower than that of animal milk.

Although the list is by no means complete, it should be clear that the milk product to be supplemented can be of animal or plant origin. Mixtures of milks from different sources can also be used in the invention. Optionally, the milk product can be supplemented with sugar such as sucrose of glucose. In a preferred embodiment, the milk product is an animal milk. Use of cow milk is particularly preferred.

Particularly in production of acidified dairy products on a commercial scale, the (fresh) milk product is pasteurized, homogenized and cooled prior to the induction of acidification. Accordingly, in one embodiment the milk product for use in the invention is homogenized, pasteurized and cooled prior to supplementation with the IMMPs. In a preferred embodiment, the milk product is homogenized, pasteurized and cooled after it is supplemented with IMMPs but prior to acidification.

Acidification is essential to obtain the fresh taste and characteristic texture of acidified dairy products. Lowering the pH to below 5, typically to about 4.6, causes proteins in the milk product to unfold and aggregate. For example, in animal milk, casein micelles will aggregate upon acidification to form a fat-casein network.

Thus, a method of the invention comprises the step of acidifying the supplemented milk product to a pH below 5. This step comprises adding an acidifying agent to the milk product. The acidifying agent can be a chemical acidifying agent or a microbial acidifying agent.

A chemical acidifying agent is a chemical compound capable of a gradual or instantaneous reduction of the pH of the supplemented milk product. Chemical acidifying agents suitable for use in the invention include food acceptable acids and/or lactones. Carboxylic acids such as citric acid, tartaric acid, acetic acid and lactic acid are examples of suitable food acceptable acids. An example of a useful lactone is glucano delta-lactone (GDL).

Hence, in one embodiment, acidifying of the supplemented milk product comprises addition of a chemical acidifying agent. Preferably, the chemical acidifying agent comprises a food acceptable acid and/or lactone. For example, the chemical acidifying agent comprises one or more compounds selected from the group consisting of acetic acid, citric acid, lactic acid, malic acid, succinic acid, tartaric acid and glucono delta-lactone. Preferred acids for acidifying the supplemented milk product are lactic acid and citric acid.

In a specific aspect, glucono delta lacton is used to acidify the supplemented milk product. Glucono delta-lactone (GDL), also known as gluconolactone, is a food additive with the E number E575 commonly used as a sequestrant, an acidifier, or a curing, pickling, or leavening agent. It is a lactone of d-gluconic acid. Pure GDL is a white odorless crystalline powder. GDL has been marketed for use in feta cheese. GDL is neutral, but hydrolyses in water to gluconic acid which is acidic.

The actual concentration of the chemical acidifying agent depends on the properties of the agent and of the specific formulation of the supplemented milk product. The chemical acidifying agent is added in sufficient amount to reduce the pH of the supplemented milk product to below pH 5, preferably to about pH 4.6.

Alternatively, a microbial acidifying agent can be used to acidify the supplemented milk product. A microbial acidifying agent is a bacterial culture, typically referred to as a starter culture or inoculum. In this case, the acidifying step is essentially an inoculation of the supplemented milk product to obtain an inoculated supplemented milk product.

Starter cultures used in the production of acidified dairy products such as yoghurt usually comprise one or more strains of lactic acid bacteria. These lactic acid bacteria ferment sugars present in the milk, producing lactic acid. There are two distinct phyla of lactic acid bacteria: the *Firmicutes* and the *Actinobacteria.* Genera such as *Lactobacillus, Lactococcus, Leuconostoc, Streptococcus* and *Enterococcus* belong to the *Firmicicutes* phylum, whereas *Bificobacterium* species belong to the *Actinobacteria* phylum. Lactic acid bacteria used to produce acidified dairy products include *Lactobacillus sp., Leuconostoc sp., Lactococcus sp., Streptococcus sp.,* and *Pediococcus sp.* For example, yoghurt is typically obtained by inoculating a milk product with *Lactobacillus delbrueckii ssp. bulgaricus* and *Streptococcus thermophiles*
In principle, any type of starter culture traditionally used in making yoghurt and other cultured acidified milk products may be used in the present invention. Starter cultures used in the dairy industry are typically mixtures of lactic acid bacterial strains. However, single strain starter cultures may also be used. Starting cultures, including commercial starting cultures, comprising one or more strains of lactic acid bacteria species selected from the group consisting of *Lactobacillus sp., Leuconostoc sp., Lactococcus sp., Streptococcus sp.,* and *Pediococcus sp.* can be used as acidifying agents in a method of the invention.

Accordingly, in one embodiment acidification of the IMMP-supplemented milk product in a method of the invention comprises inoculating the milk product with at least one strain of lactic acid producing micro-organism and allowing for fermentation. Preferably, the lactic acid producing micro-organism is selected from the group consisting of *Lactobacillus sp., Leuconostoc sp., Lactococcus sp., Streptococcus sp.,* and *Pediococcus sp.* More preferably, it is selected from the group consisting of *Lactococcus lactis, Lactobacillus acidophilus, Lactobacillus bifidus, Lactobacillus bulgaricus* and *Streptococcus thermophilus.*

For the preparation of Quark, different micro-organisms may be used to inoculate an IMMP supplemented milk product. Typically, lactic acid forming micro-organisms of the species *Streptococcus lactis* and *Streptococcus cremoris* are used. Moreover, *Leuconostoc mesenteroides spp cremoris* and/or *Streptococcus diacetylactis* are used to induce flavour. Also some yoghurt or yoghurt cultures may be added upon inoculation.

Accordingly, in another embodiment the acid producing micro-organism is selected from the group consisting of *Streptococcus lactis* and *Streptococcus cremoris,* optionally in combination with *Leuconostoc mesenteroides spp cremoris* and/or *Streptococcus diacetylactis.*

Often inoculums or starter cultures comprising multiple species of lactic acid producing micro-organisms are used to induce acidification of a milk product. Therefore, in another embodiment the IMMP-supplemented milk product is inoculated with a starter culture comprising at least two different strains of lactic acid bacteria. For example, the inoculum comprises *Lactobacillus delbrueckii ssp. bulgaricus* and *Streptococcus thermophiles.*

Upon inoculation, the supplemented milk product is maintained under conditions favouring optimal growth conditions for the different micro-organisms. This means that the product is left to ferment without substantial agitation. Typical fermenting temperatures are in the range of about 30 to about 45 °C for 2 to 20 hours. Initial fermentation can be terminated, typically by cooling, when the mixture reaches a pH of approximately 4.6. For a quark, some rennet is added after inoculation the milk product with micro-organisms and prior to incubation. Generally, the fermentation of Quark takes place at 20°C for about 24 hours.

The probiotic properties of an acidified dairy product of the invention may be enhanced by addition of one or more probiotic organisms, for example *Lactobacillus casei, Lactobacillus gasseri, Lactobacillus plantarum, Lactobacillus johnsonii, Lactobacillus reuteri, Lactobacillus rhamnosus, Bifidobacterium bifidum, Bifidobacterium lactis, Bifidobacterium longum, Bifidobacterium breve, Bifidobacteriuminfantis, Enterococcus faecium, Enterococcus faecalis,* and *Streptococcus salivarius* or the yeast *Saccharomyces boulardii.* Probiotic micro-organisms can be added prior, during or after fermentation or chemical acidification.

The resulting acidified dairy product can be processed further. For instance, it can be stirred or strained to remove whey. A huge variety of acidified dairy products can be obtained, due to differences in acidification process, including inoculum and fermentation protocol, and post-processing. Examples include yoghurt, Greek-style yoghurt, quark, skyr, curd or cheese.

Preferably, the spoonable acidified dairy product of the invention is a yoghurt, Greek-style yoghurt, stirred yoghurt, quark, skyr, curd or cottage cheese. A spoonable acidified dairy product with a high viscosity, such as a Greek-style yoghurt or skyr, is particularly preferred. More preferably, the dairy product of the invention is a yoghurt, such as a set yoghurt or a stirred yoghurt. Most preferably, the dairy product of the invention is a stirred yoghurt.

Such a product may furthermore be supplemented with conventional food additives such as natural or artificial sweeteners, antioxidants, colorants, flavours, preservatives or other functional ingredients. Additives for use in acidified dairy products are well known in the art and are, for instance, described in the Kirk-Othmer Encyclopedia of Chemical Technology, 4th edition, vol., 11, "Food additives", page 805-833.

Acidified dairy products are typically stored at temperatures around 2-7 °C for periods of several days up to several weeks. Storage may negatively affect texture and sensory properties. For example, syneresis, where whey separates from the milk protein gel, is considered to reduce the sensory attractiveness of acidified dairy products. Increased viscosity is thought to stabilize the texture of acidified dairy products, thereby avoiding or slowing down processes such as syneresis.

Hence, in one embodiment, the invention provides the use of essentially linear isomalto/malto-polysaccharides (IMMPs) wherein the content of α(1→6) glycosidic linkages is at least 70%, preferably wherein the IMMPs comprise linear (i.e. unbranched) gluco-oligosaccharides of the general formula A-B, a glucan comprising such linear moiety, or a mixture comprising different gluco-oligosaccharides / moieties of the general formula A-B, characterized in that (i) the linkage between the moiety A and the moiety B is an α(1→6) glycosidic linkage; (ii) moiety A comprises two or more consecutive α(1→6) glycosidic linkages, preferably wherein A comprises an isomalto-oligosaccharide with a degree of polymerization of at least 4 glucose residues; (iii) B comprises at least two consecutive α(1→4) linked glucose residues; to increase the viscosity of a acidified dairy product, wherein said use comprises providing an acidified dairy product comprising at least 3 wt% of IMMPs.

The use of such IMMPs to improve the stability and/or sensory properties of a acidified dairy product is also provided.

### EXPERIMENTAL SECTION

### Example 1: Preparation of IMMP fibres

IMMP fibres suitable for use according to the invention may be prepared by enzymatic treatment of a starch with pullulanase (EC 3.2.1.41) and a GTFB-type 4,6-α-glucanotransferase. In this Example, a comparison was made between IMMPs obtained by only GTFB-type 4,6-α-glucanotransferase and IMMPs obtained by both pullulanase and GTFB-type 4,6-α-glucanotransferase. Moreover, IMMPs obtained by either sequential or simultaneous treatment with pullulanase and GTFB-type 4,6-α-glucanotransferase are compared.

Thus, three distinct synthetic routes were compared. Each route started with the gelatinisation of starch and was followed by one of the three treatments; (i) GTFB-type 4,6-α-glucanotransferase (GTFB) enzyme only, (ii) first debranching followed by GTFB enzyme or (iii) simultaneously debranching and GTFB treatment.

Promozyme D6 (Novozymes, Batch ATN60003), a commercially available pullulanase, was used as a debranching enzyme. The GTFB enzyme used was a truncated version of the 4,6-α-glucanotransferase GTFB enzyme of *Lactobacillus reuteri 121* denoted GTFBdNdC. This was produced by Avebe as described in Bai et al. 2015 and 2017 [4] [5].

Prior to enzymatic treatment, potato starch (Avebe, batch G3771649) was gelatinized by jet cooking with tap water at a mass ratio between 1:4 and 1:7 and a temperature of 160 °C in a Henan laboratory jet-cooker. The gelatinized starch (5 or 10 L) was poured into a pre-heated RVS steel reaction vessel. CaCl₂ (Merck, Batch A609182) was added to a final concentration of 1 mM, the temperature was set at the indicated temperature and 3 M acetic acid (VWR, Batch 16D254124) was added to set the pH. At this point, the enzymatic treatments were performed by either:
i) setting the temperature to 40 °C, adjusting the pH to 4.7, adding GTFB enzyme to a final concentrations of 30 kUnits per kg starch and incubating for 43 hours. After 43 hours, the reaction was stopped by heating to above 90 °C for 30 min. The reaction mixture was cooled to 50 to 60 °C;
ii) setting the temperature to 58.5 °C, adjusting the pH to 4.7, adding 0.2 wt% liquid Promozyme D6 per kg of starch, followed by overnight incubation. This reaction was terminated by heating to 80 °C (internal temperature) for 30 min. Upon cooling to 40 °C and, if necessary, re-adjusting the pH to 4.7, 30 kUnits per kg starch GTFB enzyme was added. After 26 hours of incubation, the reaction was stopped by heating to 90 °C. The reaction mixture was cooled to 50-55 °C;
iii) setting the temperature to 40 °C, adjusting the pH to 4.7, adding 23.7 kUnits per kg starch of GTFB enzyme and after 15 min adding 0.05 wt% liquid Promozyme D6 per kg starch. After overnight incubation, another 0.05 wt% liquid Promozyme D6 per kg starch was added. After a total incubation time of 36 hours (or shorter for products with a lower percentage of α(1→6) linkages), the reaction was terminated by heating to above 90 °C for at least 15 min. After the reaction mixture was cooled to between 50-60 °C, it was optionally filtered using a Buchner with Whatmann paper.
Subsequently, protein and salt were removed by ion exchange involving addition of either (i and ii) approximately 10% v/v Amberlite MB 20 resin (Dow, extensively rinsed with demi-water prior to use) or (iii) approximately 10% v/v Amberlite FPA40-Cl resin (Dow, Batch A075EAG043) and Amberlite 252 resin (Dow, Batch A075DBH033) and incubating for 45-60 min. Resins were prepared according to the manufacturer's instructions. The mixture was passed over a 45 µm sieve and, in case of iii also filtrated using a Buchner with Whatmann paper. A solution of 4% NaOH (Merck, Batch 1.06482.500) was added to adjust the pH to about 6. The product was spay dried using either an Anhydro Denmark spray drier with a nozzle (Tᵢₙ 250 °C, Tₒᵤₜ 110°C) or with a wheel (Tᵢₙ 270 °C, Tₒᵤₜ 140°C).

Dextrose Equivalent (DE) quantification of the product was carried out using the Luff-Schoorl procedure. The content of α(1→6) linkages is quantified by NMR spectroscopy. 1HNMR spectra were recorded in D2O at 340 K using a 600 MHz Bruker machine. The fraction of α(1→6) glycosidic linkages is calculated by dividing the anomeric α(1→6) by the sum of the anomeric α(1→4) and α(1→6) signals. The molecular weight distribution of the product was analysed via GPC-RI-MALLS. Briefly, the carbohydrate products were dissolved in 50 mM NaNOs. Samples were filtered (0.5 µm) before injection. The system consisted of a HPLC - Dionex Ultimate 3000 equipped with a GPC column (Shodex-OHpak SB-803 HQ, 8.0 x 300 mm), a refractive index detector (Wyatt - Optilab T-rEx 658 nm) and a Multi Angle Laser Light Scattering detector (Wyatt - Dawn Heleos II (18 angles). The molecular properties of the products are summarized in Table 1. The NMR analysis showed that product obtained from route i has only 25% of (α1→6)-glycosidic linkages, while the products of route ii and iii have, respectively, 76% and 87% of α(1→6)-glycosidic linkages. Moreover, a product obtained via route i has a much higher molecular weight than the products obtained via routes ii or iii.

**Table 1. Effect of preparation method on molecular properties of IMMP product.**

| Preparation method | Content of α(1→6) linkages | DE (g/100g) | Molecular weight (kDa) | Short name |
|---|---|---|---|---|
| i) GTFB only | 25% | 0.7 | 6000 & 300¹ | IMMP-25 |
| ii) Pullulanase + GTFB sequential | 76% | 5.8 | 15² | IMMP-76 |
| iii) Pullulanase + GTFB simultaneous | 87% | 9.2 | 10.3 | IMMP-87 |

| | | | | |
|---|---|---|---|---|
| ¹ About 75% of the product has a molecular weight of 6000 kDa and about 25% had a molecular weight of about 300 kDa. ² The bulk of the product has a molecular weight of 15 kDa but there is a small fraction with a significantly higher molecular weight. | | | | |

As shown in Table 1, IMMPs obtained from treatment with only GTFB-type enzyme have a significantly lower content of α(1→6) linkages than IMMPs obtained using both pullulanase and GTFB-type enzyme. This indicates that debranching is essential to obtain a high (> 70%) content of α(1→6) linkages. IMMPs obtained by sequential and simultaneous treatment with both enzymes had very similar properties. Thus, IMMPs suitable for use in a method of the invention may be obtained by either simultaneous or sequential treatment of starch with a debranching enzyme and a GTFB-type 4,6-α-glucanotransferase enzyme.

### Example 2: Effect of content of alfa(1-6) glycosidic linkages of IMMP on yoghurt viscosity

In this Example, the effect of the content of α(1→6) linkages of the IMMP fibres on the viscosity of yoghurt was assessed.

Yoghurts comprising 3 wt% of the different IMMPs prepared in Example 1 and following the recipes of Table 2 were prepared as follows. First, a 10% starter culture stock solution was made by heating 90 g of the milk to 40-50 °C in a sterile beaker and dissolving 10 g of Delvo culture (DSM, Batch FVV-221) . For a yoghurt mix of 800 g, 1.6 ml of starter culture must be added before fermentation.

The milk and the water were weighed and added to a Thermomix beaker, which was set to 40 °C and stirred. Skimmed milk powder (SMP) and IMMP (carbohydrate) were added and hydrated for 10 minutes at 40 °C. Subsequently, the mixture was pre-heated to 65 °C for 30 seconds and homogenized at 150/50 bar. It was then pasteurized for 5 minutes at 85 °C and cooled to 40 °C. The starter culture stock solution (1.6 ml per 800 g of milk mixture) was added and the mixture was incubated in the beaker in a 32 °C water bath to allow for fermentation. After fermentation, the yoghurts were cooled down to 8-10°C, homogenized with an IKA magic at 3000 rpm, filled in sterile plastic containers and placed in the refrigerator at 4-6 °C.

**Table 2. Yoghurt recipes.**

| | **No Fibre** | **IMMP-87** | **IMMP-25** |
|---|---|---|---|
| **Ingredient** | **g** | **g** | **g** |
| **Skimmed milk** | 500 | 500 | 500 |
| **40% cream** | 75 | 75 | 75 |
| **SMP (Elk, Campina)** | 60 | 60 | 60 |
| **IMMP fibre** | 0 | 30 | 30 |
| **Drink water** | 365 | 335 | 335 |
| **Total** | 1000 | 1000 | 1000 |

The viscosity of the yoghurts was measured using an Anton Paar Modular Compact Rheometer, MCR302 SN81328338 and SN81464746, cup spindle CC27 SN23477 and SN32606. The temperature was set to 10 °C. After placing the sample in the rheometer, it was left for a 300 s waiting period to allow reformation of networks. Subsequently, a constant shear rate of 10 s⁻¹ was applied for two minutes. The viscosity at the start and end of the 2-minute measurement are reported in Table 3.

**Table 3. Viscosity of yoghurts over time.**

| | **3 d at 4°C, mPas** | | **5 d at 4°C, mPas** | | **14 d at 4°C, mPas** | |
|---|---|---|---|---|---|---|
| **Sample** | **begin** | **end** | **begin** | **end** | **begin** | **end** |
| **No IMMP** | 1993 | 1394 | 2093 | 1480 | 2237 | 1547 |
| **IMMP-25** | 1882 | 1577 | 1981 | 1631 | 2124 | 1830 |
| **IMMP-87** | 2626 | 1959 | 2825 | 1974 | 3156 | 2168 |

As can be seen in Table 3, the addition of IMMP-25, characterised by a content of α(1→6) linkages of 25%, had only a negligible effect on the yoghurt viscosity despite its high molecular weight. In contrast, the addition of IMMP-87, containing 87% of α(1→6) linkages, produced a yoghurt with a significantly increased viscosity.
Thus, this example shows that a high content of α(1→6) linkages is essential to obtain the desired increase in viscosity. See also Example 7 herein below, demonstrating that the addition of IMMP with 70% or more of α(1→6) linkages has a desirable effect on yoghurt.

### Example 3: Comparison between IMMP and other slow-digestible and/or prebiotic fibres.

In this Example, IMMP fibres containing 87% or 96% α(1→6) linkages are compared to the exemplary prebiotic or slow-digestible fibres Frutafit^{®} TEX! and VitaFiber^{™} with regard to their effect on yoghurt viscosity. Frutafit^{®} TEX! is an inulin type soluble prebiotic fibre with nutritional and functional properties. It is a powdered food ingredient based on chicory inulin with a very high purity developed to improve texture and mouthfeel in various food applications. Inulin from chicory is a polydisperse mixture of linear fructose polymers with mostly a terminal glucose unit, coupled by means of β(2-1) bonds. The number of units (degree of polymerization) can vary between 2 and 60. Frutafit^{®} TEX! consists of more than 99.5% oligofructose/inulin. VitaFiber^{™} is an isomalto-oligosaccharide made from non-GMO, corn-free starch source. VitaFiber^{™} is a mixture of branched oligosaccharides containing 50/50 α(1→4) and α(1→6) bonds, is well soluble and is applied as a low caloric sweetener and is regarded as not digestible in the small intestine.

**Table 4. Yoghurt recipes.**

| Fibre type: | **No Fibre** | | **IMMP-87** | | **IMMP-96** | | **Frutafit^{®} TEX!** | | **VitaFiber^{™}** | |
|---|---|---|---|---|---|---|---|---|---|---|
| Moist cont. fbres | | | 6.5% | | 8.7% | | 5.7% | | 4.4% | |
| Ingredients | % | g | % | g | % | g | % | g | % | g |
| Full milk | 87 | 870 | 87 | 870 | 87 | 635 | 87 | 870 | 87 | 870 |
| Skimmed milk powder | 3 | 30 | 3 | 30 | 3 | 22 | 3 | 30 | 3 | 30 |
| Fibre | 0 | 0 | 3 | 32.1 | 3 | 24.0 | 3 | 31.8 | 3 | 31.4 |
| Water | 10 | 100 | 7 | 67.9 | 7 | 45.6 | 7 | 68.2 | 7 | 68.6 |
| Total | 100 | 1000 | 100 | 1000 | 100 | 730 | 100 | 1000 | 100 | 1000 |

Yoghurts were prepared according to the recipes in Table 4. All recipes contain about 3 wt% fat and 4 wt% protein. Yoghurts were prepared following the procedure outlined in Example 2. Note that the measured moisture content of the carbohydrates was used to adjust the amounts of carbohydrate such that each yoghurt (except for the negative control) contained 3% dry matter content of the carbohydrate. All recipes were made in duplicate, except for the yoghurt with IMMP-96, comprising a content of α(1→6) linkages of 96% and being prepared according to method (iii) of Example 1.

The viscosity of the yoghurts was measured after fermentation at day 7 using an Anton Paar Modular Compact Rheometer, MCR302 SN81328338 and SN81464746, cup spindle CC27 SN23477 and SN32606. The temperature was set to 10 °C. After placing the sample in the rheometer, measurements started with a 300 second waiting period to allow network reformation. The shear rate was set to linearly increase from 0.01 to 100 s-1 at 1 Hz linear and then to decrease linearly from shear rate 100 to 0.01 s-1 at 1 Hz. The measurement took 1 hour per sample. For the determination of the viscosity, 2 measurement points were used. Point 3 at 6.26 Hz at increasing shear rate from 0.01 to 100 s⁻¹ (UP) and point 31 at 6.26 Hz at decreasing shear rate 100 to 0.01 s-1 (DOWN). Results are shown in Table 5.

**Table 5. Yoghurt viscosity (mPas) after 7 days of fermentation.**

| | UP | DOWN |
|---|---|---|
| No fibre | 2600 | 1300 |
| VitaFiber | 2800 | 1400 |
| Frutafit TEX! | 2700 | 1400 |
| IMMP-87 | 4450 | 2700 |
| IMMP-96 | 4200 | 2500 |

The viscosity of yoghurt comprising 3 wt% IMMP fibre was approximately 2-fold higher than that of a yoghurt which did not comprise any fibre. This effect was slightly more pronounced for IMMP-87 than for IMMP-96. In contrast, addition of 3wt% VitaFiber or Frutafit TEX! fibres did not have a significant effect on the viscosity of the yoghurt as compared to a yoghurt devoid of soluble fibre.

### Example 4: Effect of IMMP concentration on the viscosity of yoghurt

In this Example, the effect of supplementing with IMMPs with a content of about 87% of α(1→6) linkages on the viscosity of a yoghurt is assessed over a range of IMMP concentrations.

Yoghurts were prepared as follows. Fresh milk was weighed and added in the Thermomix. Dry ingredients were added gently to prevent lumps and splashing. The mixture was heated up till 40°C and stirred at speed 3 for 10 minutes to hydrate. After hydration, it was heated up to 85°C for 5 minutes, followed by cooling down to 40°C in a stainless- steel beaker. Starter culture stock solution was added similar to Example 2 and the mixture was transferred to containers and allowed to ferment in a stove by 30°C for 1 night. After fermentation the pH was below 4.6. To prepare stirred yoghurts, the yoghurt was homogenized with IKA Magic at 3000 rpm, filled in containers and stored in the refrigerator. Set yoghurts were stored in the refrigerator after fermentation without homogenisation. Amounts and sources of the ingredients are indicated in Table 6. A Delvo starter culture (DSM, Batch FVV-221) was used.

**Table 6. Ingredients used to prepare yoghurt with different levels of IMMP-87.**

| | **IMMP-87 conc (w/w)** (moisture content 6.5%) | | | |
|---|---|---|---|---|
| Ingredients (g) | 0 | 1.5% | 3% | 6% |
| Milk full (Jumbo supermarket) | 870 | 870 | 870 | 870 |
| Skimmed milk powder (Friesland Campina, Batch L112758) | 30 | 30 | 30 | 30 |
| GTFB-87% (Avebe, Batch HL190510) | 0 | 15.8 | 31.6 | 63.3 |
| Water | 100.0 | 84.2 | 68.4 | 36.7 |
| Total | 1000 | 1000 | 1000 | 1000 |

The Brookfield viscosity was measured after 1, 7 and 14 days at refrigerator temperatures of 4 to 6 °C using a Brookfield DV2 with a helipath spindle at 10 rpm. The results are summarised in Tables 7a and 7b for the set and stirred yoghurts respectively.

**Table 7a. Dependency of Brookfield viscosity (mPas) of set yoghurts on IMMP-87 concentration.**

| IMMP-87 | 0% | 1.5% | 3% | 6% |
|---|---|---|---|---|
| time | | | | |
| 24h | 84300 | 89200 | 92200 | 100600 |
| 7 days | 83400 | 91600 | 96400 | 100200 |
| 14 days | 74200 | 90800 | 96200 | 108400 |

**Table 7b. Dependency of Brookfield viscosity (mPas) of stirred yoghurts on IMMP-87 concentration.**

| IMMP-87 | 0% | 1.50% | 3% | 6% |
|---|---|---|---|---|
| time | | | | |
| 24h | 12300 | 13800 | 15900 | 18800 |
| 7 days | 17400 | - | - | 25600 |
| 14 days | 16400 | 21300 | 19900 | 24500 |

From Tables 7a and 7b, it can be concluded that supplementation with a range of concentrations of IMMP-87 increased the viscosity of both set and stirred yoghurts. For set yoghurts, this effect was particularly noticeable upon storage for 7 or 14 days. The increase in yoghurt viscosity depended on the IMMP concentration, with higher concentrations showing a higher viscosity.

### Example 5: Comparison of IMMP and other slow digestible and/or prebiotic fibres.

In this Example, IMMP fibres with a 96% content of α(1→6) linkages were compared to the exemplary fibres Frutafit^{®} TEX!, Frutafit^{®} HD, Orafti^{®} P95 and VitaFiber^{™} with regards to their effect on the Brookfield viscosity and storage modulus G' of chemically acidified milk gels.

Acid milk gels were prepared as follows. Skimmed milk powder stock was prepared by dissolving 290 g skimmed milk powder (Elk, Friesland Campina) in 710 ml demineralized water. A simulated milk ultra-filtrate solutions SMUF and SMUF* were prepared according to the recipes in Table 8a. A 30 wt% fibre stock in SMUF* solution was prepared comprising either IMMP-96, Frutafit^{®} TEX!, Frutafit^{®} HD, Orafti^{®} P95 or VitaFiber^{™} taking the moisture content of the fibres into account. 100 ml acid milk gel solutions were prepared by mixing the three stock solutions at a temperature of 30 °C and adding glucono delta lacton, following the recipe in Table 8b. After 17 hours of incubation, the acid milk gels are poured into plastic 50 g pots and stored at 4 °C for 7 days.

**Table 8a. Simulated milk ultra-filtrate (SMUF and SMUF*) solution recipes.**

| | SMUF | SMUF* |
|---|---|---|
| Monopotassium phosphate | 3.16 g | 3.16 g |
| Potassium citrate tribasic | 2.40 g | 2.40g |
| Sodium citrate dehydrate | 3.58 g | 3.58 g |
| Potassium sulphate | 0.36 g | 0.36 g |
| Potassium carbonate | 0.60 g | 0.60 g |
| Potassium chloride | 1.2 g | 1.2 g |
| Calcium chloride dihydrate | 2.64 g | |
| Magnesium chloride hexahydrate | 1.30 g | |
| Demineralised water | 2 L | 1.96 L |

**Table 8b. Recipe of 6 wt% fibre acid milk gels.**

| | |
|---|---|
| Skimmed milk powder stock (g) | 25.57 |
| Fibre stock solution (g) | 20 |
| SMUF (g) | 53.33 |
| Glucono delta lacton (g) | 1.1 |

After 7 days, the Brookfield viscosity and the storage modulus of the acid milk gels was measured.

The Brookfield viscosity measurements are performed with the viscosity meter LVDVI+ and LVDV II+ from Brookfield. The measurements are performed with LV spindles 2 and 3 (S62/S63) at 6 rpm for 30 seconds. The average within these 30 seconds is considered the viscosity in mPas.

The storage modulus G' was measured using Modular Compact rheometers MCR 302 SN81328338 and SN81464746 with cup spindle CC27 SN23477 and SN32606 from Anton Paar. Prior to the measurement, the solution was mixed during 60s at a rate of 300 s-1 . Then, stress controlled measurements in time (one measurement every minute) were performed at 1Hz Hz using a strain of 1% during 17 hours. The temperature was set at 30°C for all the experiment. Before the measurements where started, the samples were covered with paraffin oil to prevent evaporation. The results of these measurements are shown in Table 9.

**Table 9. Brookfield viscosity (mPas) and storage modulus G' of acid milk gels comprising 6 wt% fibre.**

| | Brookfield viscosity (mPas) | Storage modulus G' |
|---|---|---|
| No fibre | 2300 | 110 |
| Frutafit^{®} HD | 3800 | 170 |
| Vitafiber^{™} | 2450 | 135 |
| Orafti^{®} P95 | 2950 | 135 |
| Frutafit^{®} TEX! | 3850 | 175 |
| IMMP-96 | 5500 | 320 |

Both the Brookfield viscosity and the storage modulus of an acid milk gel supplemented with 6% IMMP-96 was significantly increased (respectively with a factor of 2.4 and 2.9). Supplementing with 6 wt% of any of the other fibres did not significantly increase either the Brookfield viscosity or the storage modulus.

### Example 6 : Effect of IMMP concentration on the viscosity of acid milk gels

In this Example, the effect of the concentration of IMMP fibres with an approximately 96% content of α(1→6) linkages on the viscosity of chemically acidified acid milk gels was assessed.

Acid milk gels were prepared as described in Example 5, following the recipes of Table 10.

**Table 10. Acid milk gel recipes with different concentrations of IMMP-96.**

| IMMP-96 | 0% | 1.5% | 3% | 6% | 12% |
|---|---|---|---|---|---|
| Skimmed milk powder stock (g) | 25.57 | 25.57 | 25.57 | 25.57 | 25.57 |
| IMMP-96 stock (g) | 0 | 5 | 10 | 20 | 40 |
| SMUF (g) | 73.33 | 68.33 | 63.33 | 53.33 | 33.33 |
| Glucono delta lacton | 1.1 | 1.1 | 1.1 | 1.1 | 1.1 |

After storing for 7 days at 4 °C, the Brookfield viscosity and storage modulus G' of the acid milk gels were measured as described in Example 5. The results are shown in table 11.

**Table 11. Dependency of Brookfield viscosity (mPas) and storage modulus G'of acid milk gels on IMMP-96 concentration.**

| IMMP-96 | 0% | 1.5% | 3% | 6% | 12% |
|---|---|---|---|---|---|
| Brookfield viscosity (mPas) | 2300 | 3100 | 3800 | 5500 | 9150 |
| Storage modulus | 110 | 130 | 220 | 320 | 430 |

These results indicate that supplementing acid milk gels with IMMP-96 results in a higher storage modulus and a higher viscosity across a range of concentrations. Both properties appear to have a roughly linear dependence on IMMP-96 concentration within the measured range.

### Example 7: Influence of the content of alfa (1→6) glycosidic linkages in IMMP on yoghurt viscosity

IMMP's with different contents of alfa (1→6) glycosidic linkages were prepared according to the procedure described in Example 1(iii). After termination the reaction at 36 hours, IMMP with 87% alfa (1→6) glycosidic linkages was obtained (IMMP-87). By taking samples earlier in time, IMMP's with either 70% or 77% alfa (1→6) glycosidic linkages were obtained (IMMP-70 and IMMP-77, respectively).

To assess the effect of the IMMP's on the viscosity of yoghurt, stirred yoghurts were prepared as was done in Example 4. The amount of IMMP fibre was corrected for its moisture content (m.c.). The Brookfield viscosity was measured after 7 and 14 days storage at refrigerator temperatures of 4 to 6 °C using a Brookfield DV2 with a helipath spindle at 10 rpm.

The results in Table 12 show that supplementation with IMMP's having at least 70% of alfa (1→6) glycosidic linkages increases the viscosity of stirred yoghurt. The increase in viscosity is positively related to the alfa (1→6) content and the concentration of the IMMP.

**Table 12: Yoghurt recipes (A) and Brookfield viscosities (B) obtained using IMMP having a alfa (1→6) glycosidic linkages of 87, 77 or 69%.**

| **A** | | | | | | | |
|---|---|---|---|---|---|---|---|
| | | **IMMP-87** | | **IMMP-77** | | **IMMP.70** | |
| | | conc w/w | | conc w/w | | conc w/w | |
| Ingredients (g) | 0% | 3% | 6% | 3% | 6% | 3% | 6% |
| Milk full (Jumbo supermarket) | 870 | 870 | 870 | 870 | 870 | 870 | 870 |
| Skimmed milk powder (Friesland Campina) | 30 | 30 | 30 | 30 | 30 | 30 | 30 |
| IMMP-87 (Avebe,; 6.7% m.c.) | 0 | 32.2 | 35.7 | | | | |
| IMMP-77 (Avebe, 8.1% m.c.) | 0 | | | 32.6 | 65.3 | | |
| **IMMP-70** (Avebe, 3.7% m.c.) | 0 | | | | | 31.3 | 62.3 |
| Water | 100 | 67.8 | 35.7 | 67.4 | 34.7 | 68.7 | 37.7 |
| Total | 1000 | 1000 | 1000 | 1000 | 1000 | 1000 | 1000 |

| **B** | | **IMMP-87** | | **IMMP-77** | | **IMMP-70** | |
|---|---|---|---|---|---|---|---|
| Storage time | 0% | 3% | 6% | 3% | 6% | 3% | 6% |
| 7 days | 17000 | 21300 | 24100 | 18100 | 20100 | 17400 | 18600 |
| 14 days | 17400 | 21900 | 27500 | 20100 | 23600 | 19400 | 20900 |

### REFERENCES

[1] S. e. a. Mende, "Concentration dependent effects of dextran on the phydical properties of acid milk gels," Carb. Pol. , vol. 98, pp. 1389-1396, 2013.
[2] D. H. S. a. L. J. Pachekrepapol, "Effect of dextran and dextran sulfate on the structural and rheological properties of model acid milk gels," J. Dairy Sci., Vols. %1 van %22843-2852, p. 98, 2015.
[3] H. Leemhuis, J. Dobruchowska, M. Ebbelaar, F. Faber, P. Buwalda, M. van der Maarel, J. Kamerling en L. Dijkhuizen, "Isomalto/malto-polysaccharide, a novel soluble dietary fiber made via enzymatic conversion of starch," J. Agric. Food Chem., vol. 62, pp. 12034-12044, 2014.
[4] Y. Bai, R. van der Kraaij, A. Woortman, Z. Jin en L. Dijkhuizen, "Characterization of the 4,6-α-glucanotransferase GTFB enzyme of Lactobacillus reuteri 121 isolated from inclusion bodies.," BMC Biotechnology, p. 15:49, 2015.
[5] Y. Bai, J. Gangoiti, B. Dijkstra, L. Dijkhuizen en T. Pijning, "Crystal structure of 4,6-α-glucanotransferase supports diet-driven evolution of GH70 enzymes from α-amylases in oral bacteria," Structure, vol. 25, pp. 231-242, 2017.

## Claims

1. A method for providing a spoonable acidified dairy product, comprising the steps of:
a) providing an alpha-glucan composition comprising essentially linear isomalto/malto-polysaccharides (IMMPs) **characterised by** a content of α(1→6) glycosidic linkages of at least 70%;
b) supplementing a milk product with said alpha-glucan composition to provide a supplemented milk product comprises at least 3 wt% of IMMPs; and
c) acidifying the supplemented milk product to a pH below 5, preferably to a pH of about 4.6.

2. Method according to claim 1, wherein said milk product is selected from the group of fresh milk, skim milk, reconstituted milk powder from mammals.

3. Method according to any one of claims 1 or 2, wherein said supplemented milk product comprises 3 to 12 wt% of IMMPs.

4. Method according to any one of claims 1-3, wherein step c) comprises the steps of
(c1) inoculating the supplemented milk product with at least one lactic acid producing micro-organism, preferably selected from the group consisting of *Lactobacillus* sp., *Leuconostoc* sp., *Lactococcus* sp., *Streptococcus* sp., and *Pediococcus* sp., more preferably selected from the group consisting of *Lactococcus lactis, Lactobacillus acidophilus, Lactobacillus bifidus, Lactobacillus bulgaricus* and *Streptococcus thermophilus;* and
(c2) allowing for fermentation.

5. Method according to any one of claims 1-3, wherein step c) comprises adding an amount of chemical acidifying agent to the supplemented milk product to obtain a final pH below 5, preferably wherein the chemical acidifying agent is agent comprises one or more compounds selected from the group consisting of acetic acid, citric acid, lactic acid, malic acid, succinic acid, tartaric acid and glucono delta-lactone, more preferably wherein the chemical acidifying agent is glucono delta- lacton.

6. Use of an alpha-glucan composition comprising essentially linear isomalto/malto-polysaccharides (IMMPs) **characterised by** a content of α(1→6) glycosidic linkages of at least 70% to increase the viscosity, stability and/or sensory properties of an acidified dairy product, wherein said use comprises providing an acidified dairy product comprising at least 3 wt% of IMMPs

7. Method according to any one of claims 1-5, or use according to claim 6, wherein the alpha-glucan composition comprises IMMPs with a content of α(1→6) linkages of at least 70%, wherein the IMMPs are linear (i.e. unbranched) gluco-oligosaccharides of the general formula A-B, glucans comprising such a linear moiety, or a mixture comprising different gluco-oligosaccharides / moieties of the general formula A-B, wherein
(i) the linkage between the moiety A and the moiety B is an α(1→6) glycosidic linkage;
(ii) moiety A comprises at least two consecutive α(1→6) glycosidic linkages, preferably wherein moiety A comprises an isomalto-oligosaccharide with a degree of polymerisation of at least four glucose residues;
(iii) moiety B comprises at least two consecutive α(1→4) glycosidic linkages.

8. Method or use according to any one of claims 1-7, wherein said alpha-glucan composition is obtained by subjecting a starch substrate to a treatment with a debranching enzyme and to a treatment with a GTFB-type 4,6-α-glucanotransferase, preferably wherein said treatments are performed simultaneously.

9. Method or use according to claim 8, wherein the debranching enzyme is iso-amylase (EC 3.2.1.68) or pullulanase (EC 3.2.1.41), preferably wherein the debranching enzyme is pullulanase.

10. Method or use according to claim 8 or 9, wherein the GTFB-type 4,6-α-glucanotransferase is GTFB from *Lactobacillus reuteri 121.*

11. Method or use according to any one of claims 8-10, wherein said starch substrate is selected from the group consisting of cereal starches such as corn, wheat, rice, barley or rye starches, root or tuber starches such as tapioca, sweet potato, arrow root and potato starch, and leguminous starches such as pea and bean starches.

12. Method or use according to any one of claims 1-11, wherein the Brookfield viscosity of the acidified dairy product is in the range of 5000 mPas to 70000 mPas.

13. Method or use according to any one claims 1-12, wherein said acidified dairy product is a yoghurt, Greek style yoghurt, quark, skyr, curd or cheese, preferably a yoghurt.

14. A spoonable acidified dairy product comprising at least 3 wt% of essentially linear isomalto/malto-polysaccharides (IMMPs) having a content of α(1→6) glycosidic linkages of at least 70%.

15. Spoonable acidified dairy product according to claim 14, wherein the IMMPs comprise linear (i.e. unbranched) gluco-oligosaccharides of the general formula A-B, glucans comprising such a linear moiety, or a mixture comprising different gluco-oligosaccharides / moieties of the general formula A-B, wherein
(i) the linkage between the moiety A and the moiety B is an α(1→6) glycosidic linkage;
(ii) moiety A comprises two or more consecutive α(1→6) glycosidic linkages, preferably wherein A comprises an isomalto- oligosaccharide with a degree of polymerization of at least 4 glucose residues;
(iii) B comprises at least two consecutive α(1→4) linked glucose residues.

16. Spoonable acidified dairy product according to claim 14 or 15, having a Brookfield viscosity in the range of 5000 mPas to 70000 mPas.

17. Spoonable acidified dairy product according to any one of claims 14-16, being a yoghurt, Greek style yoghurt, quark, skyr, curd or cheese, preferably a yoghurt.

## Patentansprüche

1. Verfahren zum Bereitstellen eines löffelbaren, gesäuerten Milchprodukts umfassend die Schritten von:
a) Bereitstellen einer Alpha-Glucan-Zusammensetzung umfassend im Wesentlichen lineare Isomaltose/Maltose-Polysaccharide (IMMPs), **gekennzeichnet durch** einen Gehalt an α(1→6) glykosidischen Bindungen von mindestens 70 %;
b) Ergänzen eines Milchprodukts mit der Alpha-Glucan-Zusammensetzung zum Bereitstellen eines ergänzten Milchprodukts, das mindestens 3 Gew.-% an IMMPs umfasst; und
c) Säuern des ergänzten Milchprodukts bis zu einem pH unter 5, vorzugsweise bis zu einem pH von ungefähr 4,6.

2. Verfahren nach Anspruch 1, wobei das Milchprodukt ausgewählt ist aus der Gruppe von Frischmilch, Magermilch, rekonstituiertem Milchpulver von Säugern.

3. Verfahren nach einem der Ansprüche 1 oder 2, wobei das ergänzte Milchprodukt 3 bis 12 Gew.-% von IMMPs umfasst.

4. Verfahren nach einem der Ansprüche 1 bis 3, wobei Schritt c) die Schritte umfasst von
(c1) Inokulieren des ergänzten Milchprodukts mit mindestens einem milchsäureproduzierenden Mikroorganismus, vorzugsweise ausgewählt aus der Gruppe bestehend aus *Lactobacillus* sp., *Leuconostoc* sp., *Lactococcus* sp., *Streptococcus* sp. und *Pediococcus* sp., weiter bevorzugt ausgewählt aus der Gruppe bestehend aus *Lactococcus lactis, Lactobacillus acidophilus, Lactobacillus bifidus, Lactobacillus bulgaricus* und *Streptococcus thermophilus;* und
(c2) Zulassen von Fermentation.

5. Verfahren nach einem der Ansprüche 1 bis 3, wobei Schritt c) Hinzufügen einer Menge an chemischem Säuerungsmittel zu dem ergänzten Milchprodukt umfasst, um einen finalen pH unter 5 zu erreichen, vorzugsweise wobei das chemische Säuerungsmittel ein Mittel ist, das ein oder mehrere Verbindungen ausgewählt aus der Gruppe bestehend aus Essigsäure, Zitronensäure, Milchsäure, Apfelsäure, Bernsteinsäure, Weinsäure und Glucono-Delta-Lacton, umfasst, weiter bevorzugt, wobei das chemische Säuerungsmittel Glucono-Delta-Lacton ist.

6. Verwendung einer Alpha-Glucan-Zusammensetzung umfassend im Wesentlichen lineare Isomaltose/Maltose-Polysaccharide (IMMPs), **gekennzeichnet durch** einen Gehalt an α(1→6) glykosidischen Bindungen von mindestens 70 %, um die Viskosität, Stabilität und/oder sensorische Eigenschaften eines gesäuerten Milchprodukts zu erhöhen, wobei die Verwendung Bereitstellen eines gesäuerten Milchprodukts umfassend mindestens 3 Gew.-% an IMMPs, umfasst.

7. Verfahren nach einem der Ansprüche 1 bis 5, oder Verwendung nach Anspruch 6, wobei die Alpha-Glucan-Zusammensetzung IMMPs mit einem Gehalt an α(1→6)-Bindungen von mindestens 70 % umfasst, wobei die IMMPs lineare (d. h. unverzweigte) Gluco-Oligosaccharide der allgemeinen Formel A-B, Glucane, die eine solche lineare Einheit umfassen, oder ein Gemisch umfassend verschiedene Gluco-Oligosaccharide / Einheiten der allgemeinen Formel A-B, wobei
(i) die Bindung zwischen der Einheit A und der Einheit B eine α(1→6) glykosidischeBindung ist;
(ii) Einheit A mindestens zwei konsekutive α(1→6) glykosidische Bindungen umfasst, vorzugsweise wobei die Einheit A ein Isomaltose-Oligosaccharid mit einem Polymerisationsgrad von mindestens vier Glukoseresten umfasst;
(iii) Einheit B mindestens zwei konsekutive α(1→4) glykosidische Bindungen umfasst.

8. Verfahren oder Verwendung nach einem der Ansprüche 1 bis 7, wobei die Alpha-Glucan-Zusammensetzung erhalten wird, durch Unterziehen eines Stärkesubstrats einer Behandlung mit einem Entflechtungs-(Debranching-)Enzym und einer Behandlung mit einer GTFB-Typ-4,6-α-Glucanotransferase, vorzugsweise wobei die Behandlungen gleichzeitig durchgeführt wird.

9. Verfahren oder Verwendung nach Anspruch 8, wobei das Entflechtungs-(Debranching-)Enzym Iso-Amylase (EC 3.2.1.68) oder Pullulanase (EC 3.2.1.41) ist, vorzugsweise wobei das Entflechtungs-(Debranching-)Enzym Pullulanase ist.

10. Verfahren oder Verwendung nach Anspruch 8 oder 9, wobei die GTFB-Typ-4,6-α-Glucanotransferase GTFB von *Lactobacillus reuteri 121* ist.

11. Verfahren oder Verwendung nach einem der Ansprüche 8 bis 10, wobei das Stärkesubstrat ausgewählt ist aus der Gruppe bestehend aus Getreidestärken wieMais-, Weizen-, Reis-, Gerste- oder Roggenstärken, Wurzel- oder Knollenstärken wie Tapioka-, Süßkartoffel-, Pfeilwurz- und Kartoffelstärke und Hülsenfrüchtestärken wie Erbsen- und Bohnenstärke.

12. Verfahren oder Verwendung nach einem der Ansprüche 1 bis 11, wobei die Brookfield-Viskosität des gesäuerten Milchprodukts im Bereich von 5000 mPas bis 70000 mPas ist.

13. Verfahren oder Verwendung nach einem der Ansprüche 1 bis 12, wobei das gesäuerte Milchprodukt ein Joghurt, Joghurt nach griechischer Art, Quark, Skyr, Käsebruch oder Käse, vorzugsweise ein Joghurt ist.

14. Löffelbares, gesäuertes Milchprodukt umfassend mindestens 3 Gew.-% von im Wesentlichen linearen Isomaltose-/Maltose-Polysacchariden (IMMPs) mit einem Gehalt an α(1→6) glykosidischen Bindungen von mindestens 70 %.

15. Löffelbares, gesäuertes Milchprodukt nach Anspruch 14, wobei die IMMPs lineare (d. h. unverzweigte) Gluco-Oligosaccharide der allgemeinen Formel A-B, Glucane, die eine solche lineare Einheit umfassen, oder ein Gemisch umfassend verschiedene Gluco-Oligosaccharide / Einheiten der allgemeinen Formel A-B, wobei
(i) die Bindung zwischen der Einheit A und der Einheit B eine α(1→6) glykosidische Bindung ist;
(ii) Einheit A zwei oder mehr konsekutive α(1→6) glykosidische Bindungen umfasst, vorzugsweise wobei A ein Isomaltose-Oligosaccharid mit einem Polymerisationsgrad von mindestens vier Glukoseresten umfasst;
(iii) B mindestens zwei konsekutive α(1→4) verknüpfte Glukosereste umfasst.

16. Löffelbares, gesäuertes Milchprodukt nach Anspruch 14 oder 15 mit einer Brookfield-Viskosität im Bereich von 5000 mPas bis 70000 mPas.

17. Löffelbares, gesäuertes Milchprodukt nach einem der Ansprüche 14 bis 16, das ein Joghurt, Joghurt nach griechischer Art, Quark, Skyr, Käsebruch oder Käse, vorzugsweise ein Joghurt ist.

## Revendications

1. Procédé de fabrication d'un produit laitier acidifié pouvant être mangé à la cuillère, comprenant les étapes consistant à :
a) fournir une composition d'alpha-glucanes comprenant des isomalto/malto-polysaccharides (IMMP) essentiellement linéaires **caractérisés par** une teneur en liaisons glycosidiques α(1→6) d'au moins 70 % ;
b) enrichir un produit laitier avec ladite composition d'alpha-glucanes pour obtenir un produit laitier enrichi comprenant au moins 3 % en poids d'IMMP ; et
c) acidifier le produit laitier enrichi jusqu'à l'obtention d'un pH inférieur à 5, de préférence jusqu'à l'obtention d'un pH d'environ 4,6.

2. Procédé selon la revendication 1, dans lequel le produit laitier est choisi dans le groupe comprenant du lait frais, du lait écrémé, du lait en poudre reconstitué provenant de mammifères.

3. Procédé selon l'une quelconque des revendications 1 ou 2, dans lequel ledit produit laitier enrichi comprend de 3 à 12 % en poids d'IMMP.

4. Procédé selon l'une quelconque des revendications 1 à 3, dans lequel l'étape c) comprend les étapes consistant à :
(c1) inoculer le produit laitier enrichi à au moins un micro-organisme producteur d'acide lactique, de préférence choisi dans le groupe comprenant des *Lactobacillus sp.,* des *Leuconostoc sp.,* des *Lactococcus sp.,* des *Streptococcus sp.,* et des *Pediococcus sp.,* plus particulièrement choisi dans le groupe comprenant des *Lactococcus lactis,* des *Lactobacillus acidophilus,* des *Lactobacillus bifidus,* des *Lactobacillus bulgaricus* et des *Streptococcus thermophilus ;* et
(c2) permettre la fermentation.

5. Procédé selon l'une quelconque des revendications 1 à 3, dans lequel l'étape c) consiste à ajouter une quantité d'agent acidifiant chimique au produit laitier enrichi afin d'obtenir un pH final inférieur à 5, de préférence dans lequel l'agent acidifiant chimique est un agent qui comprend un ou plusieurs composés choisis dans le groupe comprenant de l'acide acétique, de l'acide citrique, de l'acide lactique, de l'acide malique, de l'acide succinique, de l'acide tartrique et de la glucono-delta-lactone, davantage de préférence dans lequel l'agent acidifiant chimique est la glucono-delta-lactone.

6. Utilisation d'une composition d'alpha-glucanes comprenant des isomalto/malto-polysaccharides (IMMP) principalement linéaires **caractérisés par** une teneur en liaisons glycosidiques α(1→6) d'au moins 70 % afin d'augmenter la viscosité, la stabilité et/ou les propriétés sensorielles d'un produit laitier acidifié, dans lequel ladite utilisation comprend le fait de fournir un produit laitier acidifié comprenant au moins 3 % en poids d'IMMP.

7. Procédé selon l'une quelconque des revendications 1 à 5, ou utilisation selon la revendication 6, dans lequel la composition d'alpha-glucanes comprend des IMMP avec une teneur en liaisons α(1→6) d'au moins 70 %, dans lequel les IMMP sont des gluco-oligosaccharides linéaires (autrement dit, non ramifiés) de formule générale A-B, des glucanes comprenant un tel fragment linéaire, ou un mélange comprenant différents gluco-oligosaccharides/fragments de formule générale A-B, dans lequel
(i) la liaison entre le fragment A et le fragment B est une liaison glycosidique α(1→6) ;
(ii) le fragment A comprend au moins deux liaisons glycosidiques α(1→6) consécutives, de préférence dans lequel le fragment A comprend un isomalto-oligosaccharide présentant un degré de polymérisation d'au moins quatre résidus de glucose ;
(iii) le fragment B comprend au moins deux liaisons glycosidiques α(1→4) consécutives.

8. Procédé ou utilisation selon l'une quelconque des revendications 1 à 7, dans lequel ladite composition d'alpha-glucanes est obtenue par le fait de soumettre un substrat d'amidon à un traitement avec une enzyme de débranchement et à un traitement avec une 4,6-α-glucanotransférase de type GTFB, de préférence dans lequel ces traitements sont effectués simultanément.

9. Procédé ou utilisation selon la revendication 8, dans lequel l'enzyme de débranchement est l'iso-amylase (EC 3.2.1.68) ou la pullulanase (EC 3.2.1.41), de préférence dans lequel l'enzyme de débranchement est la pullulanase.

10. Procédé ou utilisation selon la revendication 8 ou 9, dans lequel la 4,6-α-glucanotransférase de type GTFB est la GTFB issue de *Lactobacillus reuteri* 121.

11. Procédé ou utilisation selon l'une quelconque des revendications 8 à 10, dans lequel ledit substrat d'amidon est choisi dans le groupe comprenant des amidons de céréales tels que l'amidon de maïs, l'amidon de blé, l'amidon de riz, l'amidon d'orge ou l'amidon de seigle, des amidons de racines ou de tubercules tels que l'amidon de tapioca, l'amidon de patate douce, l'amidon de marante et l'amidon de pomme de terre, et des amidons de légumineuses tels que l'amidon de pois et l'amidon de de haricots.

12. Procédé ou utilisation selon l'une quelconque des revendications 1 à 11, dans lequel la viscosité Brookfield du produit laitier acidifié est comprise entre 5000 mPas et 70000 mPas.

13. Procédé ou utilisation selon l'une quelconque des revendications 1 à 12, dans lequel ledit produit laitier acidifié est un yaourt, un yaourt à la grecque, du fromage blanc, du skyr, du caillé ou du fromage, de préférence un yaourt.

14. Produit laitier acidifié pouvant être mangé à la cuillère comprenant au moins 3 % en poids de isomalto/malto-polysaccharides essentiellement linéaires (IMMP) dont la teneur en liaisons glycosidiques α(1→6) est d'au moins 70 %.

15. Produit laitier acidifié pouvant être mangé à la cuillère selon la revendication 14, dans lequel les IMMP comprennent des gluco-oligosaccharides linéaires (autrement dit, non ramifiés) de formule générale A-B, des glucanes comprenant un tel fragment linéaire, ou un mélange comprenant différents gluco-oligosaccharides/fragments de formule générale A-B, dans lequel
(i) la liaison entre le fragment A et le fragment B est une liaison glycosidique α(1→6) ;
(ii) le fragment A comprend deux liaisons glycosidiques α(1→6) consécutives ou plus, de préférence dans lequel le fragment A comprend un isomalto-oligosaccharide présentant un degré de polymérisation d'au moins 4 résidus de glucose ;
(iii) le fragment B comprend au moins deux résidus de glucose liés par liaison α(1→4) consécutifs.

16. Produit laitier acidifié pouvant être mangé à la cuillère selon la revendication 14 ou 15, présentant une viscosité Brookfield comprise entre 5000 mPas et 70000 mPas.

17. Produit laitier acidifié pouvant être mangé à la cuillère selon l'une quelconque des revendications 14 à 16, qui représente un yaourt, un yaourt à la grecque, du fromage blanc, du skyr, du caillé ou du fromage, de préférence un yaourt.
